# EUROPÄISCHE PATENTSCHRIFT

(11) **EP 2 654 922 B1**
(45) Veröffentlichungstag und Bekanntmachung des Hinweises auf die Patenterteilung: **28.09.2016**
(21) Anmeldenummer: 11802708.5
(22) Anmeldetag: 19.12.2011
(51) Int. Cl.: B01D 46/52, B01D 46/00, B01D 46/10

(54) **LUFTFILTERELEMENT**
AIR FILTER ELEMENT
ÉLÉMENT DE FILTRE À AIR

(30) Priorität: 23.12.2010 DE 102010064030
(43) Veröffentlichungstag der Anmeldung: 30.10.2013
(73) Patentinhaber: MAHLE International GmbH, 70376 Stuttgart (DE)
(72) Erfinder: ENDERICH, Andreas, 73734 Esslingen (DE); JERGER, Alexander, 75173 Pforzheim (DE); TRAUB, Matthias, 71034 Böblingen (DE); VON MERKATZ, Hendrik, 71686 Remseck (DE); WAIBEL, Hans, 71686 Remseck Aldingen (DE)
(74) Vertreter: BRP Renaud & Partner mbB Rechtsanwälte Patentanwälte Steuerberater
(86) Internationale Anmeldenummer: PCT/EP2011/073155
(87) Internationale Veröffentlichungsnummer: WO 2012/084753

(56) Entgegenhaltungen:
- US-A- 4 200 444
- US-B1- 6 692 639

## Beschreibung

Die vorliegende Erfindung betrifft ein Luftfilterelement für ein Luftfilter eines Kraftfahrzeugs, insbesondere eines Nutzfahrzeugs, mit den Merkmalen des Oberbegriffs des Anspruchs 1. Die Erfindung betrifft außerdem ein mit einem derartigen Luftfilterelement ausgestattetes Luftfilter für eine Brennkraftmaschine, insbesondere eines Kraftfahrzeugs.

Aus der DE 10 2008 028 834 A1 ist ein Luftfilterelement bekannt, das einen Filterkörper aus einem Filtermaterial sowie eine erste Endplatte und eine zweite Endplatte aufweist, die in einer Axialrichtung voneinander beabstandet sind und das Filterelement in der Axialrichtung begrenzen. Der Filterkörper ist somit axial zwischen den beiden Endplatten angeordnet, die aus einem luftdichten Plattenmaterial, wie z. B. Kunststoff, bestehen. Beim bekannten Luftfilterelement liegen die beiden Endplatten in zueinander geneigt verlaufenden Ebenen. Hierdurch ist das Luftfilterelement an eine vorbestimmte Einbausituation adaptiert.

Aus der US 6,692,639 B1 ist ein Luftfilterelement für ein Luftfilter eines Kraftfahrzeugs bekannt, umfassend einen ersten Filterkörper aus einem Filtermaterial, eine erste Endplatte und eine zweite Endplatte, die in einer Axialrichtung voneinander beabstandet sind und das Filterelement in der Axialrichtung begrenzen, wobei der erste Filterkörper axial zwischen den beiden Endplatten angeordnet ist. Ferner ist ein zweiter Filterkörper aus einem Filtermaterial vorgesehen, der axial zwischen den beiden Endplatten angeordnet ist, wobei eine Zwischenplatte axial zwischen den beiden Filterkörpern angeordnet ist, wobei die Zwischenplatte den beiden Filterkörpern gemeinsam zugeordnet ist. Die Zwischenplatte weist dabei eine von ihrer Außenkontur umschlossene Zwischenplattenfläche auf, die größer ist als eine von der Außenkontur der ersten Endplatte umschlossene erste Endplattenfläche und/oder die größer ist als eine von der Außenkontur der zweiten Endplatte umschlossene zweite Endplattenfläche. Sämtliche Filterkörper des bekannten Filterelements sind ringförmig ausgestaltet und umschließen in ihrer Umfangsrichtung jeweils einen Innenraum vollständig geschlossen.

Die Unterbringung von Luftfiltern an Fahrzeugen ist häufig problematisch, da regelmäßig nur wenig Bauraum zur Verfügung steht. Um den zur Verfügung stehenden Bauraum besser ausnutzen zu können, ist es grundsätzlich möglich, ein entsprechendes Filtergehäuse geometrisch unter Berücksichtigung der zur Verfügung stehenden Bauraumsituation zu gestalten. Das zugehörige Filterelement ist dann komplementär zum Gehäuse zu gestalten. Bei Serienprodukten, insbesondere bei Großserienprodukten, ist dies jedoch problematisch, da komplexe Geometrien bei Großserienteilen zu hohen Stückpreisen führen. Insoweit werden für Großserienteile regelmäßig einfache Geometrien bevorzugt.

Aus der JP 04-175459 A und aus der JP 04-134175 A sind weitere Luftfilter für Motorräder bekannt, deren Filterelement jeweils zwei Filterkörper aufweist, die unterschiedlich groß sind und die jeweils mit zwei gleich großen Endplatten axial verschlossen sind. Dabei sind die einander zugewandten Endplatten der beiden Filterkörper aneinander luftdicht angeordnet. Bei der JP 04-175459 A mündet ein erstes Lufteinlassrohr in den Innenraum des ersten Filterkörpers ein, während ein separates zweites Einlassrohr in den Innenraum des zweiten Filterkörpers einmündet, wobei die beiden Innenräume durch die beiden aneinander anliegenden Endplatten hindurch fluidisch miteinander verbunden sind. Im Unterschied dazu ist bei der JP 04-134175 A ein gemeinsames Einlassrohr vorgesehen, das in die beiden, fluidisch miteinander verbundenen Innenräume der beiden Filterkörper einmündet.

Aus der DE 10 2007 024 287 A1 ist ein Filterelement mit nur einem Filterköper bekannt, der zwischen zwei Endplatten angeordnet ist. Der Filterkörper besitzt hierbei einen U-förmigen Querschnitt, wobei eine offene Seite des Filterkörpers mit einer Verschlussplatte verschlossen ist, die mit beiden Endplatten verbunden ist.

Die WO 02/40133 A1 zeigt nun ein Filterelement mit zwei Filterkörpern, zwei Endplatten und einer gemeinsamen Zwischenplatte, die beiden Filterkörpern zugeordnet ist. Beim bekannten Filterelement sind zum einen die beiden Filterkörper als Gleichteile ausgeführt, und zum anderen sind auch die drei Platten, also die beiden Endplatten und die Zwischenplatte als Gleichteile ausgeführt, zumindest sind die beiden Endplatten und die Zwischenplatte gleich groß.

Die vorliegende Erfindung beschäftigt sich mit dem Problem, für ein Luftfilterelement der Eingangs genannten Art bzw. für ein zugehöriges Luftfilter eine verbesserte Ausführungsform anzugeben, die sich insbesondere dadurch auszeichnet, dass eine verbesserte Ausnutzung des zur Verfügung stehenden Bauraums möglich ist, während gleichzeitig vergleichsweise niedrige Herstellungskosten eingehalten werden können.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, axial zwischen den beiden Endplatten zumindest zwei Filterkörper anzuordnen, nämlich einen ersten Filterkörper und einen zweiten Filterkörper. Außerdem wird vorgeschlagen, axial zwischen zwei aneinandergrenzenden Filterkörpern eine gemeinsame Zwischenplatte anzuordnen. Mit anderen Worten, für je zwei axial benachbarte Filterkörper ist nur eine einzige Zwischenplatte vorgesehen, die beiden Filterkörpern zugeordnet ist. Im Vergleich zu einer herkömmlichen Bauweise, bei der jedem Filterkörper zwei Endplatten zugeordnet sind, entfällt hier zum einen eine Platte, während zum anderen das luftdichte Anordnen der einander zugewandten Endplatten entfällt ebenso wie Dichtungsmaßnahmen und/oder Verbindungs- bzw. Befestigungsmaßnahmen. Die Zwischenplatte besteht - wie die beiden Endplatten - bevorzugt aus einem luftdichten Plattenmaterial, wie z. B. Kunststoff. Die beiden Endplatten sind identisch oder unterscheiden sich in ihrer geometrischen Ausgestaltung, insbesondere durch eine andere Außenkontur und/oder Größe. Die Zwischenplatte ist, insbesondere in ihrer Form und Größe, derart ausgestaltet, dass die projizierten Flächen der beiden Endplatten darauf abbildbar sind.

Erfindungsgemäß umschließt eine Außenkontur der Zwischenplatte eine Zwischenplattenfläche, die größer ist als eine von der Außenkontur der einen Endplatte umschlossene Endplattenfläche und/oder die größer ist als eine von der Außenkontur der anderen Endplatte umschlossene Endplattenfläche. Somit ist die Zwischenplattenfläche zumindest größer als eine der Endplattenflächen. Die andere Endplattenfläche kann dann entweder gleich groß sein wie die Zwischenplattenfläche oder ebenfalls kleiner sein als die Zwischenplattenfläche.

Zur Klarstellung sei darauf hingewiesen, dass die genannten Flächen davon unabhängig zu verstehen sind, ob die jeweilige Platte nun eine axiale Öffnung aufweist, also als offene Platte ausgestaltet ist, oder ob sie als geschlossene Platte ausgestaltet ist, die keine axiale Öffnung besitzt.

Zweckmäßig liegen die einzelnen Platten in zugehörigen Plattenebenen, die parallel zueinander verlaufen, und zwar vorzugsweise jeweils senkrecht zur axial orientierten Längsmittelachse des Filterelements.

Die projizierten Flächen der Endplatten können auf der Zwischenplatte vorzugsweise einen Überdeckungsbereich aufweisen, in welchem ein Durchtritt für das zu reinigende bzw. gereinigte Fluid von dem einen Filterkörper in den anderen Filterkörper vorgesehen sein kann. Im Unterschied zu einem herkömmlichen Luftfilterelement weist das erfindungsgemäße Luftfilterelement somit nicht nur einen einzigen Filterkörper, sondern zumindest zwei Filterkörper auf, die jeweils von zwei Platten axial begrenzt sind, wobei die mittlere Platte, nämlich die Zwischenplatte, von beiden Filterkörpern gemeinsam genutzt wird. Durch die Zwischenplatte kann das Filterelement stabilisiert werden. Außerdem bildet die Zwischenplatte eine geometrisch definierte Trennung zwischen den beiden Filterkörpern, die wie eine Schnittstelle funktioniert, wodurch es bspw. möglich ist, die beiden Filterkörper hinsichtlich ihrer Form, Größe, Filtrationseigenschaft oder in sonstigen Eigenschaften unterschiedlich auszugestalten. Auf diese Weise lassen sich für das Filterelement auch komplexere Geometrien realisieren, um den vorhandenen Bauraum besser ausnutzen zu können.

Grundsätzlich können die beiden Endplatten unterschiedlich ausgestaltet sein. Z.B. besitzen die beiden Endplatten unterschiedliche Geometrien und/oder unterschiedliche Endplattenflächen und/oder unterschiedliche Außenkonturen. Sie können grundsätzlich auch aus verschiedenen Materialien hergestellt sein. Alternativ ist aber auch eine Ausführungsform möglich, bei der die beiden Endplatten identisch sind, also gleich sind und dementsprechend als Gleichteile ausgestaltet sind. Hierdurch lassen sich die Herstellungskosten des Filterelements erheblich reduzieren.

Zusätzlich oder alternativ können die beiden Filterkörper unterschiedlich ausgestaltet sein. Z.B. besitzen die beiden Filterkörper unterschiedliche Geometrien und/oder unterschiedliche Querschnittsflächen und/oder unterschiedliche Außenkonturen. Sie können grundsätzlich auch mit verschiedenen Filtermaterialien hergestellt sein. Alternativ ist aber auch eine Ausführungsform möglich, bei der die beiden Filterkörper identisch sind, also gleich sind und dementsprechend als Gleichteile ausgestaltet sind. Hierdurch lassen sich die Herstellungskosten des Filterelements erheblich reduzieren.

Insbesondere ist somit auch eine Ausführungsform realisierbar, die zwei gleiche Filterkörper und zwei gleiche Endplatten aufweist. Bevorzugt ist jedoch im Hinblick auf die verbesserte Ausnutzung des zur Verfügung stehenden Einbauraums eine Ausführungsform, bei der sich zum einen die beiden Endplatten und zum anderen die beiden Filterkörper voneinander unterscheiden, insbesondere in geometrischer Hinsicht.

Gemäß einer anderen vorteilhaften Ausführungsform kann vorgesehen sein, dass das Filterelement ausschließlich aus fünf Bestandteilen besteht, nämlich aus den beiden Endplatten, den beiden Filterkörpern und der gemeinsamen Zwischenplatte. Hierdurch ergibt sich ein besonders preiswerter Aufbau für das Filterelement.

Entsprechend einer vorteilhaften Ausführungsform kann die erste Endplatte den ersten Filterkörper an einer ersten Axialseite dicht verschließen, während die Zwischenplatte den ersten Filterkörper an einer zweiten Axialseite dicht verschließt. Gleichzeitig verschließt dieselbe Zwischenplatte den zweiten Filterkörper an einer ersten Axialseite dicht, während die zweite Endplatte den zweiten Filterkörper an einer zweiten Axialseite dicht verschließt. Während die Endplatten jeweils nur eine einzige Axialseite, nämlich die voneinander abgewandten äußeren Axialseiten der beiden Filterkörper dicht verschließen, verschließt die Zwischenplatte gleichzeitig die zwei einander zugewandten inneren Axialseiten der beiden Filterkörper. Die Zwischenplatte bildet dabei eine Art Schnittstelle, die es ermöglicht, die beiden Filterkörper, die grundsätzlich unterschiedlich geformte und/oder unterschiedlich dimensioniert sein können, zu einem gemeinsamen Filterelement zu integrieren.

Vorzugsweise können die beiden Endplatten, insbesondere vollflächig, geschlossen ausgestaltet sein, während die Zwischenplatte offen ausgestaltet ist und dementsprechend zumindest eine Öffnung aufweist, durch die ein vom ersten Filterkörper umfangsmäßig begrenzter erster Innenraum mit einem vom zweiten Filterkörper umfangsmäßig begrenzten zweiten Innenraum fluidisch verbunden ist. Durch die offene Zwischenscheibe können die beiden Innenräume der beiden Filterkörper ein gemeinsames Inneres des Filterelements bilden.

Entsprechend der vorliegenden Erfindung ist der erste Filterkörper im Axialschnitt U-förmig ausgestaltet, wobei eine offene Seite des U-förmigen ersten Filterkörpers mit einer Verschlussplatte dicht verschlossen ist, wobei diese Verschlussplatte eine Anschlussöffnung aufweist, durch die eine fluidische Verbindung mit dem ersten Innenraum bzw. mit dem Inneren des Filterelements möglich ist. Hierdurch ist es möglich, das Filterelement bzw. ein dazu passendes Filtergehäuse mit einem seitlichen Anschluss für Rohluft oder Reinluft vorzusehen, was für bestimmte Einbaukonfigurationen vorteilhaft ist. Besonders zweckmäßig ist eine Ausführungsform, bei der die Anschlussöffnung zwischen der ersten Endplatte und der Zwischenplatte positioniert ist.

Weiterhin ist eine Ausführungsform von Vorteil, bei der sich die Verschlussplatte zumindest im Bereich des ersten Filterkörpers im Wesentlichen parallel zur Axialrichtung erstreckt. Hierdurch ergeben sich einfache Außenkonturen, was das Einsetzen des Filterelements in das Filtergehäuse erleichtert.

Des Weiteren kann vorgesehen sein, dass sich die Verschlussplatte axial ausschließlich im Bereich des ersten Filterkörpers erstreckt, also nicht bis zum zweiten Filterkörper reicht. Dies kann insbesondere dann von Vorteil sein, wenn der zweite Filterkörper in der Umfangsrichtung eine geschlossene Gestalt oder Struktur besitzt.

Alternativ ist es bei einer anderen Ausführungsform möglich, dass sich die Verschlussplatte axial über beide Filterkörper erstreckt. Bspw. kann eine derartige Ausführungsform von Vorteil sein, wenn auch der zweite Filterkörper im Axialschnitt U-förmig ausgestaltet ist, wobei die offene Seite des U-förmigen zweiten Filterkörpers mit Hilfe der Verschlussplatte dicht verschlossen ist. Somit kann eine einzige, gemeinsame Verschlussplatte dazu verwendet werden, beide seitlich offenen Filterkörper dicht zu verschließen.

Bei einer anderen Ausführungsform kann der zweite Filterkörper im Axialschnitt einen zugehörigen zweiten Innenraum in der Umfangsrichtung geschlossen umschließen bzw. begrenzen, sodass der zweite Filterkörper keine offene Seite besitzt. Bevorzugt ist dieser zweite Filterkörper mit einem runden Querschnitt, insbesondere mit einem zylindrischen oder ringförmigen Querschnitt, insbesondere mit einem ovalen oder elliptischen oder kreisförmigen Querschnitt ausgestattet.

Somit lassen sich unterschiedliche Ausführungsformen für das Filterelement realisieren. Bspw. ist ein Filterelement denkbar, das einen U-förmigen ersten Filterkörper und einen ringförmigen zweiten Filterkörper aufweist. Alternativ lässt sich auch ein Filterelement darstellen, bei dem beide Filterkörper U-förmig gestaltet sind.

Besonders vorteilhaft ist eine Ausführungsform, bei der die beiden Filterkörper geometrisch verschieden sind. Wie erwähnt, lassen sich dadurch unterschiedliche Einbausituationen optimal zur Unterbringung des Filterelements nutzen.

Bei einer anderen Ausführungsform können die Endplatten und die Zwischenplatte parallel zueinander verlaufen, also in zueinander parallelen Ebenen liegen. Hierdurch ergibt sich eine besonders einfache Herstellbarkeit für die Filterkörper. Bspw. kann zum Herstellen der Filterkörper ein bahnenförmiges Filtermaterial verwendet werden, das zick-zack-förmig gefaltet wird, wobei dann das gefaltete Filtermaterial gemäß der Geometrie des Filterkörpers um den jeweiligen Innenraum angeordnet wird. Das plissierte Filtermaterial kann außerdem rolliert sein, um ein flächiges Aneinanderliegen benachbarter Falten zu vermeiden.

Alternativ ist auch eine Ausführungsform denkbar, bei der zumindest zwei der Platten in zueinander geneigten Ebenen liegen.

Die vorliegende Erfindung betrifft außerdem ein Luftfilter mit einem Filtergehäuse, wobei das Filtergehäuse einen Lufteinlass und einen Luftauslass aufweist und außerdem einen Aufnahmeraum umschließt. Ferner umfasst das Luftfilter ein erfindungsgemäßes Filterelement, das in den Aufnahmeraum eingesetzt ist. Im Aufnahmeraum trennt das Filterelement eine mit dem Lufteinlass fluidisch verbundene Rohseite von einer mit dem Luftauslass fluidisch verbundenen Reinseite.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Schnittansicht eines Luftfilters mit Filtergehäuse und darin angeordnetem Filterelement,
- Fig. 2: eine isometrische Schnittansicht des Luftfilters mit Filtergehäuse und Filterelement,
- Fig. 3: eine isometrische Ansicht des Luftfilters bei vom Filtergehäuse entferntem Deckel,
- Fig. 4: eine isometrische Ansicht des Filterelements,
- Fig. 5: eine auseinandergezogene isometrische Ansicht des Filterelements aus Fig. 4,
- Fig. 6: eine isometrische Ansicht des Filterelements wie in Fig. 4, jedoch bei einer anderen Ausführungsform,
- Fig. 7: eine auseinandergezogene isometrische Ansicht des Filterelements aus Fig. 6,
- Fig. 8: eine isometrische Ansicht eines schematisch dargestellten Filterelementes in einer anderen Ausführungsform.

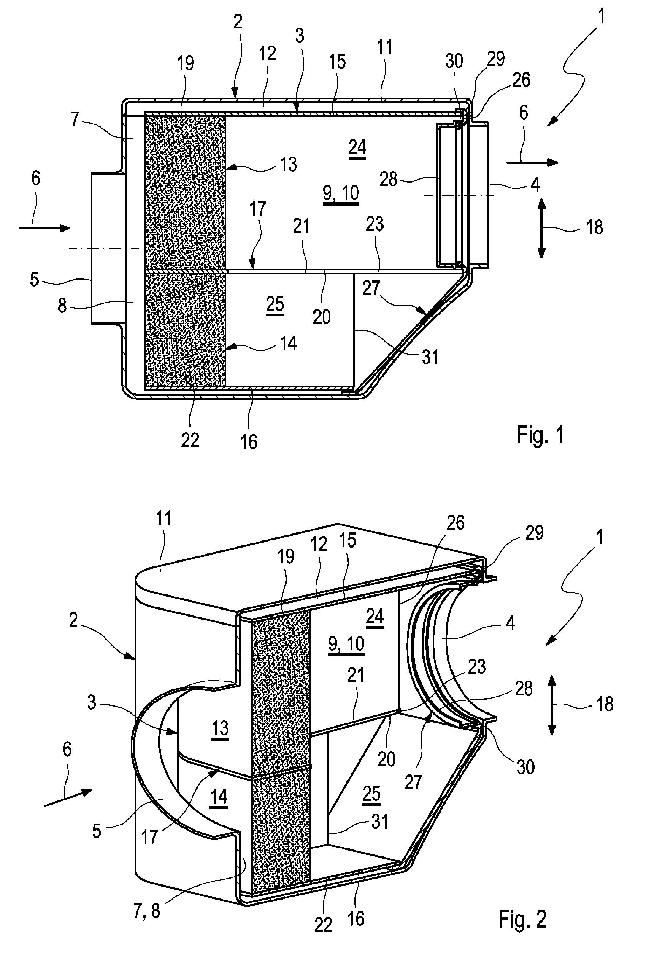

Entsprechend den Figuren 1 bis 3 umfasst ein Luftfilter 1 ein Filtergehäuse 2 und ein Luftfilterelement 3 oder Filterelement 3. Das Luftfilter 1 dient zum Filtern von Ansaugluft einer Brennkraftmaschine, die insbesondere in einem Fahrzeug angeordnet sein kann.

Das Filtergehäuse 2 weist zwei Öffnungen 4 und 5 auf, von denen die eine als Lufteinlass dient, während die andere als Luftauslass dient. In Fig. 1 ist rein exemplarisch eine Luftströmung 6 durch Pfeile angedeutet. Bei dieser Strömungsrichtung bildet die mit 5 bezeichnete Öffnung den Lufteinlass 5, während die mit 4 bezeichnete Öffnung den Luftauslass 4 bildet. Grundsätzlich ist auch eine umgekehrte Strömungsrichtung denkbar, sodass dann die mit 4 bezeichnete Öffnung den Lufteinlass 4 bildet, während dann die mit 5 bezeichnete Öffnung den Luftauslass 5 bildet.

Das Filtergehäuse 2 umschließt einen Aufnahmeraum 7 zur Aufnahme des Filterelements 3. In diesem Aufnahmeraum 7 trennt das Filterelement 3 eine Rohseite 8, die mit dem Lufteinlass 5 fluidisch verbunden ist, von einer Reinseite 9, die mit dem Luftauslass 4 fluidisch verbunden ist. Im gezeigten Beispiel ist das Filterelement 3 von außen nach innen durchströmt, sodass ein Inneres 10 des Filterelements 3 die Reinseite 9 bildet. Bei umgekehrter Strömungsrichtung bildet das Innere 10 des Filterelements 3 dann entsprechend die Rohseite.

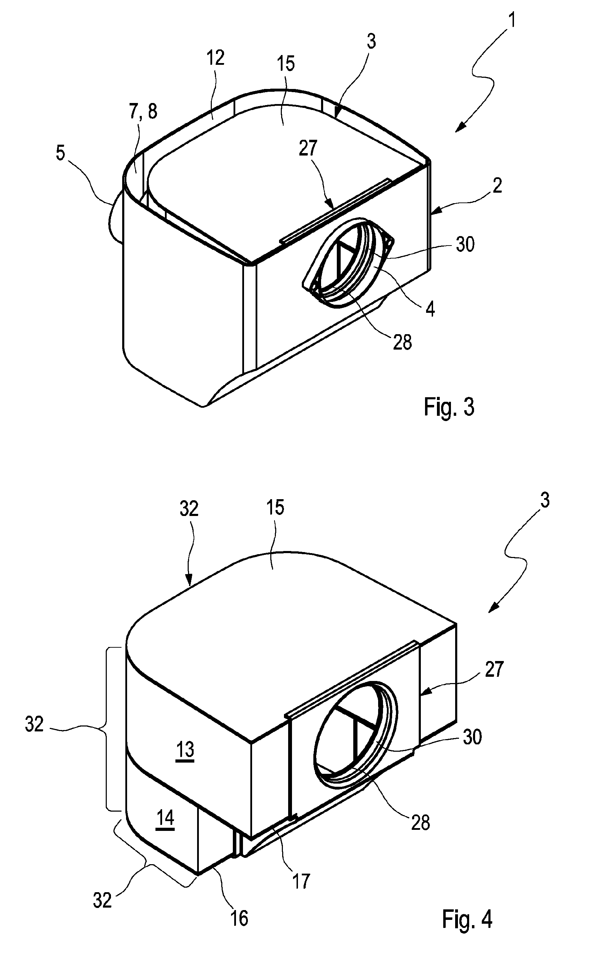

Das Filtergehäuse 2 weist im Beispiel außerdem einen Deckel 11 auf, mit dem eine Zugriffsöffnung 12 verschlossen werden kann, durch welche das Filterelement 3 in den Aufnahmeraum 7 eingesetzt bzw. aus diesem herausgenommen werden kann. In den Figuren 1 und 2 verschließt der Deckel 11 die Zugriffsöffnung 12. In Fig. 3 ist der Deckel 11 entfernt, wodurch ein Zugriff zum Filterelement 3 möglich ist.

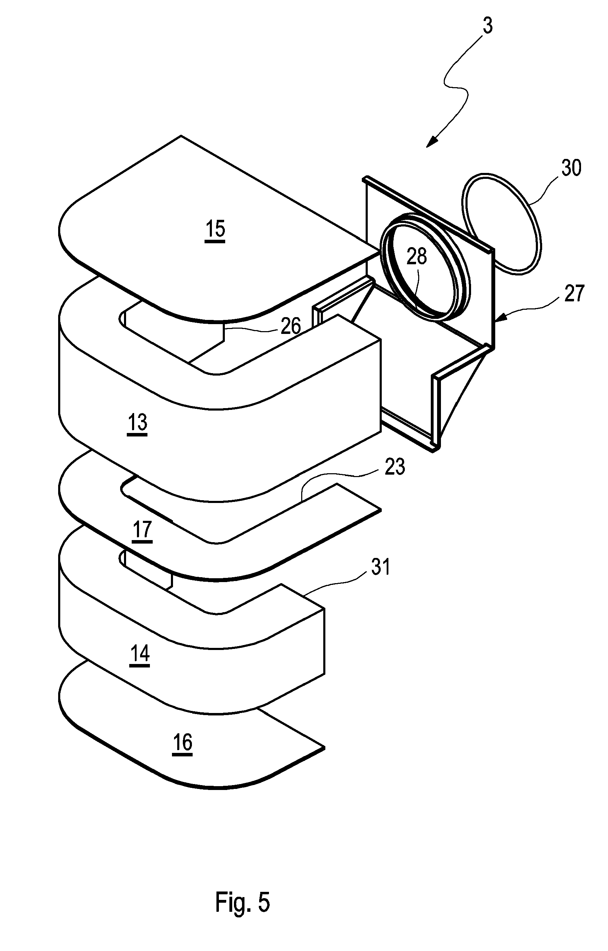

Entsprechend den Figuren 1 bis 8 weist das jeweilige Luftfilterelement 3 einen ersten Filterkörper 13 aus einem Filtermaterial und einen zweiten Filterkörper 14 aus einem Filtermaterial auf. Zweckmäßig bestehen die beiden Filterkörper 13, 14 aus dem gleichen Filtermaterial. Ferner umfasst das Filterelement 3 eine erste Endplatte 15, eine zweite Endplatte 16 und eine einzige bzw. gemeinsame Zwischenplatte 17. Die beiden Endplatten 15, 16 sind in einer in den Figuren durch einen Doppelpfeil angedeuteten Axialrichtung 18 voneinander beabstandet. Die Axialrichtung 18 erstreckt sich dabei parallel zu Flächen oder Falten des bahnenförmigen, gefalteten Filtermaterials. Alternativ lässt sich die Axialrichtung 18 bei den gezeigten Ausführungsbeispielen, bei denen die Platten 15,16,17 parallel zueinander verlaufen, auch dadurch definieren, dass sie sich senkrecht zu einer Ebene erstreckt, zu welcher die Platten 15,16,17 parallel verlaufen. Erkennbar besitzen die beiden Endplatten 15, 16 bei den hier gezeigten Ausführungsformen unterschiedliche geometrische Gestalten, insbesondere hinsichtlich Abmessung und Umfangskontur. Alternativ ist auch eine Ausführungsform möglich, bei der die beiden Endplatten 15, 16 identisch gestaltet sind.

Ferner begrenzen die beiden Endplatten 15,16 das Filterelement 3 in der Axialrichtung 18. Somit sind beide Filterkörper 13,14 axial zwischen den beiden Endplatten 15,16 angeordnet.

Die Zwischenplatte 17 ist axial zwischen den beiden Endplatten 15,16 und außerdem axial zwischen den beiden Filterkörpern 13,14 angeordnet. Im Einzelnen ergibt sich somit für das Filterelement 3 ein Aufbau, bei dem in Axialrichtung 18 an die erste Endplatte 15 der erste Filterkörper 13 angrenzt, wobei an den ersten Filterkörper 13 die Zwischenplatte 17 angrenzt, wobei an die Zwischenplatte 17 der zweite Filterkörper 14 angrenzt und wobei an den zweiten Filterkörper 14 die zweite Endplatte 16 angrenzt.

Die erste Endplatte 15 verschließt den ersten Filterkörper 13 an einer ersten Axialseite 19 luftdicht. Die Zwischenplatte 17 verschließt den ersten Filterkörper 13 an einer zweiten Axialseite 20 luftdicht. Außerdem verschließt die Zwischenplatte 17 den zweiten Filterkörper 14 an einer ersten Axialseite 21 luftdicht. Die zweite Endplatte 16 verschließt den zweiten Filterkörper 14 an einer zweiten Axialseite 22 luftdicht.

Erkennbar sind die beiden Endplatten 15, 16 vollflächig geschlossen ausgestaltet, sodass keine Luft durch die Endplatten 15, 16 axial in das Innere 10 des Filterelements 3 eintreten bzw. daraus austreten kann. Die Zwischenplatte 17 ist zentral offen ausgestaltet. Hierzu enthält sie zumindest eine Öffnung 23. Der erste Filterkörper 13 begrenzt in der Umfangsrichtung einen ersten Innenraum 24, während der zweite Filterkörper 14 in der Umfangsrichtung einen zweiten Innenraum 25 begrenzt. Die Umfangsrichtung bezieht sich dabei auf die Axialrichtung 18. Die beiden Innenräume 24,25 sind durch die wenigstens eine Öffnung 23 der Zwischenplatte 17 fluidisch miteinander verbunden. Hierdurch können die beiden Innenräume 24, 25 gemeinsam das Innere 10 des Filterelements 3 bilden.

Bei den hier gezeigten, bevorzugten Ausführungsformen ist der erste Filterkörper 13 im Axialschnitt, also in einer senkrecht zur Axialrichtung 18 verlaufenden Schnittebene U-förmig ausgestaltet. Hierdurch besitzt der erste Filterkörper 13 quer zur Axialrichtung 18 eine offene Seite 26. Diese offene Seite 26 des ersten Filterkörpers 13 ist mit einer Verschlussplatte 27 luftdicht verschlossen. Die Verschlussplatte 27 weist eine Anschlussöffnung 28 auf, durch die hindurch eine fluidische Verbindung mit dem Inneren 10 des Filterelements 3 möglich ist. Das Filterelement 3 ist so in das Filtergehäuse 2 eingesetzt, dass die Anschlussöffnung 28 fluidisch mit der Gehäuseöffnung 4 verbunden ist, die im Beispiel den Auslass 4 bildet. Insbesondere kann an der Verschlussplatte 27 an einer vom Inneren 10 abgewandten Außenseite eine ringförmige Dichtkontur 29 ausgebildet sein, um im Bereich der Gehäuseöffnung 4 das Innere 10 des Filterelements 3 von dem außerhalb des Filterelements 3 liegenden Bereich des Aufnahmeraums 7 dicht zu trennen. Zusätzlich oder alternativ kann die Verschlussplatte 27 im Bereich der Anschlussöffnung 28 einen Dichtring 30 aufweisen, wodurch es möglich ist, ein hier nicht gezeigtes Anschlussrohr durch die Gehäuseöffnung 4 hindurch in die Anschlussöffnung 28 hinein zu stecken, derart, dass das Anschlussrohr unmittelbar über den Dichtring 30 an der Anschlussöffnung 28 abgedichtet ist, sodass die Gefahr einer Leckage reduziert ist.

Im Beispiel ist die Anschlussöffnung 28 an der Verschlussplatte 27 so angeordnet, dass sie sich vollständig axial zwischen der ersten Endplatte 15 und der Zwischenplatte 17 befindet. Die Anschlussöffnung 28 ermöglicht einen seitlichen, also quer zur Axialrichtung 18 orientierten Anschluss zum Abführen der Reinluft bzw. bei umgekehrter Strömungsrichtung zum Zuführen der Rohluft. Hierzu erstreckt sich die Verschlussplatte 27 zumindest im Bereich des ersten Filterkörpers 13 im Wesentlichen parallel zur Axialrichtung 18.

Bei der in den Figuren 1 bis 5 gezeigten Ausführungsform erstreckt sich die Verschlussplatte 27 in der Axialrichtung 18 über beide Filterkörper 13,14. Bei dieser Ausführungsform ist auch der zweite Filterkörper 14 im Axialschnitt U-förmig ausgestaltet, sodass auch der zweite Filterkörper 14 quer zur Axialrichtung 18 eine offene Seite 31 aufweist. Zweckmäßig sind die beiden offenen Seiten 26,31 der beiden Filterkörper 13,14 gleich orientiert. Somit kann auch die offene Seite 31 des zweiten Filterkörpers 14 mit Hilfe der Verschlussplatte 27 luftdicht verschlossen werden.

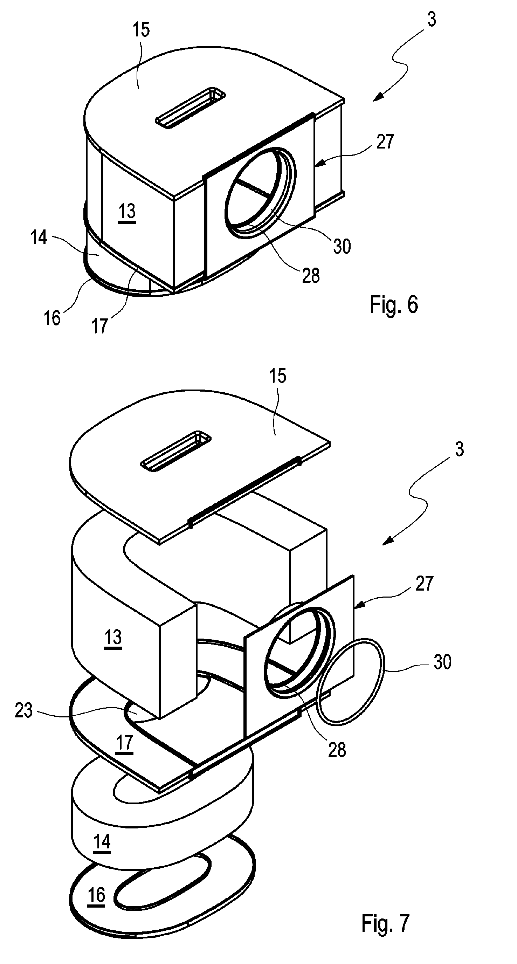

Im Unterschied dazu zeigen die Figuren 6 und 7 eine Ausführungsform, bei welcher sich die Verschlussplatte 27 in der Axialrichtung 18 nur im Bereich des ersten Filterkörpers 13 erstreckt. Bei dieser Ausführungsform ist der zweite Filterkörper 14 so ausgestaltet, dass er in der Umfangsrichtung den zweiten Innenraum 25 geschlossen umgibt, sodass der zweite Filterkörper 14 abweichend zum ersten Filterkörper 13 in dieser Ausführungsform keine offene Seite besitzt. Bspw. kann der zweite Filterkörper 14 im Axialschnitt einen ovalen Querschnitt aufweisen. Grundsätzlich sind jedoch auch andere runde Querschnitte möglich, wie z. B. elliptische Querschnitte und kreisförmige Querschnitte. Insbesondere ist der zweite Filterkörper 14 somit zylindrisch oder ringförmig gestaltet.

Bei den hier gezeigten Ausführungsformen sind die beiden Filterkörper 13,14 geometrisch verschieden. Zwar sind bei der Ausführungsform der Figuren 1 bis 5 beide Filterkörper 13,14 mit einem U-förmigen Querschnitt versehen, jedoch sind die beiden Filterkörper 13,14 deutlich unterschiedlich groß. Bspw. besitzt der erste Filterkörper 13 in der Axialrichtung 18 eine größere Höhe als der zweite Filterkörper 14. Auch ist der erste Filterkörper 13 quer zur Axialrichtung 18 länger konzipiert als der zweite Filterkörper 14. Bei der in den Figuren 6 und 7 gezeigten Ausführungsform liegen bereits unterschiedliche Querschnittsgeometrien vor. Während der erste Filterkörper 13 einen U-förmigen Querschnitt besitzt, weist der zweite Filterkörper 14 einen ringförmigen oder zylindrischen Querschnitt auf. Auch besitzen die beiden Filterkörper 13, 14 unterschiedliche Höhen bezüglich der Axialrichtung 18.

Bei den hier gezeigten Ausführungsformen sind die Endplatten 15,16 und die Zwischenplatte 17 eben konfiguriert und insbesondere parallel zueinander angeordnet. Grundsätzlich sind jedoch auch andere Ausführungsformen denkbar, bei denen die ebenen Platten 15,16,17 geneigt zueinander verlaufen können und/oder bei denen zumindest eine der Platten 15,16,17 uneben, insbesondere gekrümmt, sein kann. Die Zwischenplatte 17 verfügt bei den dargestellten Ausführungsformen über eine Außenkontur, welche der Außenkontur der ersten Endplatte 15 entspricht. Somit entspricht die projizierte Fläche der ersten Endplatte 15 der Kontur der Zwischenplatte 17. Die projizierte Fläche der zweiten Endplatte 16 ist vollständig auf der Zwischenplatte 17 abbildbar, so dass ein projizierter Überdeckungsbereich der ersten und zweiten Endplatte 15, 16 auf der Zwischenplatte 17 gebildet ist. Weiterhin ist bei den beschriebenen Ausführungsformen erkennbar, dass die Filterkörper 13, 14 zumindest in Teilbereichen über zueinander fluchtende Bereiche 32 verfügen. Dies ist exemplarisch an Figur 4 verdeutlicht. Diese fluchtendenden Teilbereiche 32 sind im Bereich der Rundungen, bzw. im Bereich des U-Bogens und der U-Schenkel angeordnet. Somit ergibt sich in diesen Teilbereichen 32 durch die fluchtende Ausrichtung eine gleichmäßige Anströmung.

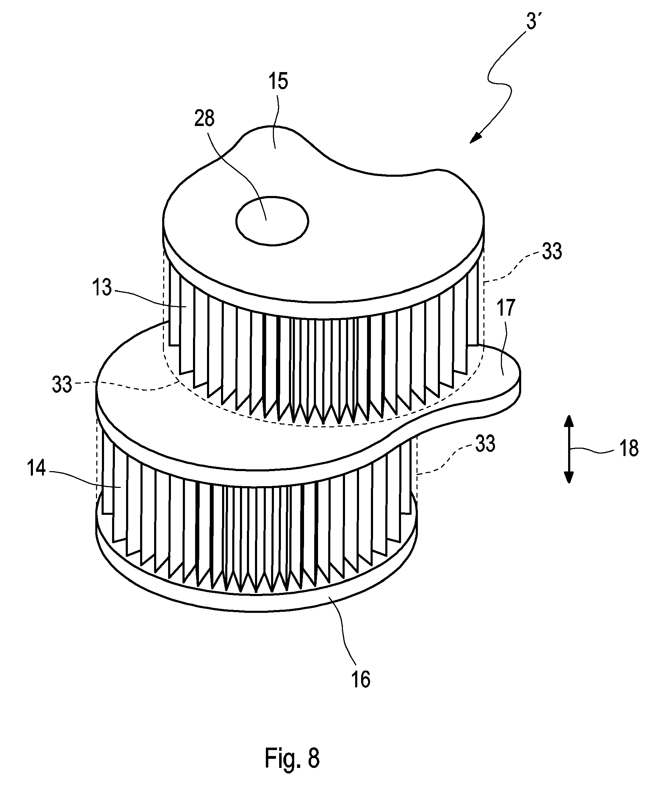

In Figur 8 ist eine isometrische Darstellung eines weiteren Filterelementes 3 dargestellt. Die Endplatten 15 und 16 verfügen über eine beliebige flächige Außengeometrie, welche selbstverständlich auch z. B. rund, oval, polygon, nierenförmig oder u-förmig sein kann. Hierbei unterscheiden sich die Endplatten 15, 16 sowohl in der Größe, als auch in der Außenkontur voneinander. Alternativ kann auch hier vorgesehen sein, die beiden Endplatten 15, 16 gleich auszugestalten. Die an den jeweiligen Endplatten 15, 16 angeordneten Filterkörper 13 bzw.14 sind gestuft bzw. versetzt zueinander angeordnet und verfügen über keine zueinander fluchtenden Außen-Bereiche. Die Innenräume 24, 25 verfügen jedoch über einen Überdeckungsbereich, damit die Innenräume 24, 25 durch eine Öffnung 23 (nicht dargestellt) miteinander verbindbar sind. Bei anderen Ausgestaltungen können die Filterkörper 13, 14 bzw. die Endplatten 15, 16 an einer in Axialrichtung 18 fluchtend verlaufenden Linie zueinander ausgerichtet sein. Die Filterkörper 13, 14 und die Endplatten 15, 16 können diese Flucht jedoch sofort verlassen, oder in einem definierten Teilbereich 32 beibehalten. Die Zwischenplatte 17 ist derart ausgestaltet, dass beide Endplatten 15, 16 mit ihren jeweiligen projizierten Flächen 33 darauf abbildbar sind. Hierbei unterscheidet sich die Kontur der Zwischenplatte 17 sowohl von der Geometrie der ersten Endplatte 15 als auch von der Geometrie der zweiten Endplatte 16. In der dargestellten nicht erfindungsgemäßen Ausführungsform verfügt die erste Endplatte 15 über die Anschlussöffnung 28. Somit kann das zu reinigende Fluid in das Filterelement 3 ein- bzw. austreten. Bei alternativen erfindungsgemäßen Ausgestaltungen kann die Anschlussöffnung 28 in Verbindung mit dem U-förmigen ersten Filterkörper 13 auch in einer seitlich angeordneten Verschlussplatte 27 gemäß den vorangehenden Darstellungen angeordnet sein. Im Überdeckungsbereich der beiden projizierten Flächen 33 ist die Öffnung 23 (nicht dargestellt) zur Verbindung der beiden Innenräume 24, 25 angeordnet.

Durch diese gestufte Anordnung der Filterkörper 13, 14 kann das Filterelement 3 an beliebige Bauräume angepasst werden.

Selbstverständlich sind die vorstehend anhand der Fig. 1 bis 8 beschriebenen Ausführungen der Filterelementes 3 auch mit mehr als zwei Filterkörpern 13, 14 realisierbar. Hierbei werden dann entsprechend mehr Zwischenplatten 17 verwendet, die in ihrer geometrischen Ausgestaltung gleich oder unterschiedlich sein können und die jeweils zwei benachbarten Filterkörpern 13, 14 gemeinsam zugeordnet sind.

## Patentansprüche

1. Luftfilterelement für ein Luftfilter (1) eines Kraftfahrzeugs, insbesondere eines Nutzfahrzeugs,
- mit einem ersten Filterkörper (13) aus einem Filtermaterial,
- mit einer ersten Endplatte (15) und einer zweiten Endplatte (16), die in einer Axialrichtung (18) voneinander beabstandet sind und das Filterelement (3) in der Axialrichtung (18) begrenzen,
- wobei der erste Filterkörper (13) axial zwischen den beiden Endplatten (15,16) angeordnet ist,
- wobei ein zweiter Filterkörper (14) aus einem Filtermaterial vorgesehen ist, der axial zwischen den beiden Endplatten (15,16) angeordnet ist,
- wobei eine Zwischenplatte (17) vorgesehen ist, die axial zwischen den beiden Filterkörpern (13,14) angeordnet ist,
- wobei die Zwischenplatte (17) den beiden Filterkörpern (13, 14) gemeinsam zugeordnet ist,
- wobei die Zwischenplatte (17) eine von ihrer Außenkontur umschlossene Zwischenplattenfläche aufweist, die größer ist als eine von der Außenkontur der ersten Endplatte (15) umschlossene erste Endplattenfläche und/oder die größer ist als eine von der Außenkontur der zweiten Endplatte (16) umschlossene zweite Endplattenfläche,
**dadurch gekennzeichnet,**
**dass** der erste Filterkörper (13) U-förmig ausgestaltet ist, wobei eine offene Seite (26) des U-förmigen ersten Filterkörpers (13) mit einer Verschlussplatte (27) dicht verschlossen ist, die eine Anschlussöffnung (28) aufweist, durch die eine fluidische Verbindung mit dem Inneren (10) des Filterelements (3) möglich ist.

2. Luftfilterelement nach Anspruch 1,
**dadurch gekennzeichnet,**
**dass** die beiden Endplatten (15, 16) jeweils vollständig senkrecht zur Zwischenplatte (17) auf die Zwischenplatte (17) projizierbar sind.

3. Luftfilterelement nach Anspruch 2,
**dadurch gekennzeichnet,**
**dass** in einem Überlappungsbereich der Projektionen zumindest eine Öffnung (23) vorgesehen ist, wobei dieser Überlappungsbereich vorzugsweise kleiner ist als die Projektion wenigstens einer der Endplatten (15, 16).

4. Luftfilterelement nach einem der Ansprüche 1 bis 3,
**dadurch gekennzeichnet,**
**dass** die beiden Endplatten (15, 16) geometrisch unterschiedlich oder gleich ausgestaltet sind.

5. Luftfilterelement nach einem der Ansprüche 1 bis 4,
**dadurch gekennzeichnet,**
**dass** die beiden Filterkörper (13, 14) gleich oder unterschiedlich ausgestaltet sind.

6. Luftfilterelement nach einem der Ansprüche 1 bis 5,
**dadurch gekennzeichnet,**
- **dass** die erste Endplatte (15) den ersten Filterkörper (13) an einer ersten Axialseite (19) dicht verschließt,
- **dass** die Zwischenplatte (17) den ersten Filterkörper (13) an einer zweiten Axialseite (20) und den zweiten Filterkörper (14) an einer ersten Axialseite (21) dicht verschließt,
- **dass** die zweite Endplatte (16) den zweiten Filterkörper (14) an einer zweiten Axialseite (22) dicht verschließt.

7. Luftfilterelement nach einem der Ansprüche 1 bis 6,
**dadurch gekennzeichnet,**
**dass** die beiden Endplatten (15,16) geschlossen ausgestaltet sind, während die Zwischenplatte (17) offen ausgestaltet ist und zumindest eine Öffnung (23) aufweist, durch die ein vom ersten Filterkörper (13) begrenzter erster Innenraum (24) mit einem vom zweiten Filterkörper (14) begrenzten zweiten Innenraum (25) fluidisch verbunden ist.

8. Luftfilterelement nach einem der Ansprüche 1 bis 7,
**dadurch gekennzeichnet,**
**dass** sich die Verschlussplatte (27) zumindest im Bereich des ersten Filterkörpers (13) im Wesentlichen parallel zur Axialrichtung (18) erstreckt.

9. Luftfilterelement nach einem der Ansprüche 1 bis 8,
**dadurch gekennzeichnet,**
**dass** sich die Verschlussplatte (27) axial nur im Bereich des ersten Filterkörpers (13) erstreckt.

10. Luftfilterelement nach einem der Ansprüche 1 bis 8,
**dadurch gekennzeichnet,**
**dass** sich die Verschlussplatte (27) axial über beide Filterkörper (13,14) erstreckt.

11. Luftfilterelement nach einem der Ansprüche 1 bis 10,
**dadurch gekennzeichnet,**
**dass** der zweite Filterkörper (14) U-förmig ausgestaltet ist, wobei die offene Seite (31) des U-förmigen zweiten Filterkörpers (14) mit der Verschlussplatte (27) dicht verschlossen ist.

12. Luftfilterelement nach einem der Ansprüche 1 bis 10,
**dadurch gekennzeichnet,**
**dass** der zweite Filterkörper (14) einen zweiten Innenraum (25) in Umfangsrichtung geschlossen umschließt.

13. Luftfilterelement nach einem der Ansprüche 1 bis 12,
**dadurch gekennzeichnet,**
**dass** die beiden Filterkörper (13,14) geometrisch und/oder hinsichtlich ihrer Filtrationswirkung verschieden sind.

14. Luftfilterelement nach einem der Ansprüche 1 bis 13,
**dadurch gekennzeichnet,**
**dass** die Endplatten (15,16) und die Zwischenplatte (17) parallel zueinander verlaufen.

15. Luftfilter für eine Brennkraftmaschine, insbesondere eines Kraftfahrzeugs,
- mit einem Filtergehäuse (2), das einen Lufteinlass (5) und einen Luftauslass (4) aufweist und das einen Aufnahmeraum (7) umschließt,
- mit einem Filterelement (3) nach einem der Ansprüche 1 bis 14, das in den Aufnahmeraum (7) eingesetzt ist und darin eine mit dem Lufteinlass (5) fluidisch verbundene Rohseite (8) von einer mit dem Luftauslass (4) fluidisch verbundenen Reinseite (9) trennt.

## Claims

1. An air filter element for an air filter (1) of a motor vehicle, in particular of a commercial vehicle,
- having a first filter body (13) consisting of a filter material,
- having a first end plate (15) and a second end plate (16), which are spaced apart from each other in an axial direction (18) and bound the filter element (3) in the axial direction (18),
- wherein the first filter body (13) is arranged axially between the two end plates (15, 16),
- wherein a second filter body (14) consisting of a filter material is provided, which is arranged axially between the two end plates (15, 16),
- wherein an intermediate plate (17) is provided, which is arranged axially between the two filter bodies (13, 14),
- wherein the intermediate plate (17) is assigned to both filter bodies (13, 14),
- wherein the intermediate plate (17) has an intermediate plate area which is enclosed by its outer contour and is greater than a first end plate area enclosed by the outer contour of the first end plate (15) and/or which is greater than a second end plate area enclosed by the outer contour of the second end plate (16),
**characterised in that**
the first filter body (13) is U-shaped, wherein an open side (26) of the U-shaped first filter body (13) is sealed with a closure plate (27), which has a connection opening (28) through which a fluid connection to the inside (10) of the filter element (3) is possible.

2. The air filter element according to Claim 1,
**characterised in that**
the two end plates (15, 16) can each be projected onto the intermediate plate (17) completely perpendicularly to the intermediate plate (17).

3. The air filter element according to Claim 2,
**characterised in that**
at least one opening (23) is provided in an overlap region of the projections, wherein this overlap region is preferably smaller than the projection of at least one of the end plates (15, 16).

4. The air filter element according to one of Claims 1 to 3,
**characterised in that**
the two end plates (15, 16) are geometrically different or identical.

5. The air filter element according to one of Claims 1 to 4,
**characterised in that**
the two filter bodies (13, 14) are identical or different.

6. The air filter element according to one of Claims 1 to 5,
**characterised in that**
- the first end plate (15) closes the first filter body (13) in an airtight manner on a first axial side (19),
- the intermediate plate (17) closes the first filter body (13) on a second axial side (20) and the second filter body (14) on a first axial side (21) in an airtight manner,
- the second end plate (16) closes the second filter body (14) in an airtight manner on a second axial side (22).

7. The air filter element according to one of Claims 1 to 6,
**characterised in that**
the two end plates (15, 16) are closed, whereas the intermediate plate (17) is open and has at least one opening (23) through which a first interior (24), which is bounded by the first filter body (13), is fluid-connected to a second interior (25), which is bounded by the second filter body (14).

8. The air filter element according to one of Claims 1 to 7,
**characterised in that**
the closure plate (27) extends substantially parallel to the axial direction (18), at least in the region of the first filter body (13).

9. The air filter element according to one of Claims 1 to 8,
**characterised in that**
the closure plate (27) extends axially only in the region of the first filter body (13).

10. The air filter element according to one of Claims 1 to 8.
**characterised in that**
the closure plate (27) extends axially over both filter bodies (13, 14).

11. The air filter element according to one of Claims 1 to 10,
**characterised in that**
the second filter body (14) is U-shaped, wherein the open side (31) of the U-shaped second filter body (14) is sealed with the closure plate (27).

12. The air filter element according to one of Claims 1 to 10,
**characterised in that**
the second filter body (14) encloses a second interior (25) in a closed manner in the circumferential direction.

13. The air filter element according to one of Claims 1 to 12,
**characterised in that**
the two filter bodies (13, 14) are different geometrically or in terms of their filtration effect.

14. The air filter element according to one of Claims 1 to 13,
**characterised in that**
the end plates (15, 16) and the intermediate plate (17) run parallel to each other.

15. An air filter for an internal combustion engine, in particular of a motor vehicle,
- having a filter housing (2), which has an air inlet (5) and an air outlet (4) and which encloses a receiving space (7),
- having a filter element (3) according to one of Claims 1 to 14, which is inserted into the receiving space (7) and therein separates an untreated side (8) which is fluid-connected to the air inlet (5) from a clean side (9) which is fluid-connected to the air outlet (4).

## Revendications

1. Elément de filtre à air pour un filtre à air (1) d'un véhicule automobile, en particulier d'un véhicule utilitaire,
- avec un premier corps de filtre (13) en un matériau filtrant,
- avec une première plaque terminale (15) et une seconde plaque terminale (16) qui sont espacées l'une de l'autre dans un sens axial (18) et délimitent l'élément de filtre (3) dans le sens axial (18),
- dans lequel le premier corps de filtre (13) est agencé axialement entre les deux plaques terminales (15, 16),
- dans lequel un second corps de filtre (14) en un matériau filtrant est prévu, lequel est agencé axialement entre les deux plaques terminales (15,16),
- dans lequel une plaque intermédiaire (17) est prévue, laquelle est agencée axialement ente les deux corps de filtre (13, 4),
- dans lequel la plaque intermédiaire (17) est associée aux deux corps de filtre (13, 14) ensemble,
- dans lequel la plaque intermédiaire (17) présente une surface de plaque intermédiaire entourée par son contour extérieur qui est plus grande qu'une première surface de plaque terminale entourée par le contour extérieur de la première plaque terminale (15) et/ou qui est plus grande qu'une seconde surface de plaque terminale entourée par le contour extérieur de la seconde plaque terminale (16),
**caractérisé en ce que**
le premier corps de filtre (13) est configuré en forme de U, dans lequel un côté ouvert (26) du premier corps de filtre en U (13) est fermé de manière étanche avec une plaque de fermeture (27) qui présente une ouverture de raccordement (28), par laquelle une liaison fluidique est possible avec l'intérieur (10) de l'élément de filtre (3).

2. Elément de filtre à air selon la revendication 1,
**caractérisé en ce que**
les deux plaques terminales (15, 16) sont projetables respectivement complètement perpendiculairement à la plaque intermédiaire (17) sur la plaque intermédiaire (17).

3. Elément de filtre à air selon la revendication 2,
**caractérisé en ce que**
au moins une ouverture (23) est prévue dans une zone de chevauchement des projections, dans lequel cette zone de chevauchement est de préférence plus petite que la projection au moins d'une des plaques terminales (15, 16).

4. Elément de filtre à air selon l'une quelconque des revendications 1 à 3,
**caractérisé en ce que**
les deux plaques terminales (15, 16) sont configurées de manière différente ou identique géométriquement.

5. Elément de filtre à air selon l'une quelconque des revendications 1 à 4,
**caractérisé en ce que**
les deux corps de filtre (13, 14) sont configurés de manière identique ou différente.

6. Elément de filtre à air selon l'une quelconque des revendications 1 à 5, **caractérisé en ce que**
- la première plaque terminale (15) ferme de manière étanche le premier corps de filtre (13) sur un premier côté axial (19),
- la plaque intermédiaire (17) ferme de manière étanche le premier corps de filtre (13) sur un second côté axial (20) et le second corps de filtre (14) sur un premier côté axial (21),
- la seconde plaque terminale (16) ferme de manière étanche le second corps de filtre (14) sur un second côté axial (22).

7. Elément de filtre à air selon l'une quelconque des revendications 1 à 6,
**caractérisé en ce que**
les deux plaques terminales (15, 16) sont configurées de manière fermée alors que la plaque intermédiaire (17) est configurée de manière ouverte et présente au moins une ouverture (23), par laquelle un premier espace intérieur (24) délimité par le premier corps de filtre (13) est relié fluidiquement à un second espace intérieur (25) délimité par le second corps de filtre (14).

8. Elément de filtre à air selon l'une quelconque des revendications 1 à 7,
**caractérisé en ce que**
la plaque de fermeture (27) s'étend au moins dans la zone du premier corps de filtre (13) sensiblement parallèlement au sens axial (18).

9. Elément de filtre à air selon l'une quelconque des revendications 1 à 8, **caractérisé en ce que**
la plaque de fermeture (27) s'étend axialement seulement dans la zone du premier corps de filtre (13).

10. Elément de filtre à air selon l'une quelconque des revendications 1 à 8,
**caractérisé en ce que**
la plaque de fermeture (27) s'étend axialement sur les deux corps de filtre (13, 14).

11. Elément de filtre à air selon l'une quelconque des revendications 1 à 10,
**caractérisé en ce que**
le second corps de filtre (14) est configuré en forme de U, dans lequel le côté ouvert (31) du second corps de filtre (14) en U est fermé de manière étanche avec la plaque de fermeture (27).

12. Elément de filtre à air selon l'une quelconque des revendications 1 à 10,
**caractérisé en ce que**
le second corps de filtre (14) entoure de manière fermée un second espace intermédiaire (25) dans le sens périphérique.

13. Elément de filtre à air selon l'une quelconque des revendications 1 à 12,
**caractérisé en ce que**
les deux corps de filtre (13, 14) sont différents géométriquement et/ou en ce qui concerne leur action de filtration.

14. Elément de filtre à air selon l'une quelconque des revendications 1 à 13,
**caractérisé en ce que**
les plaques terminales (15, 16) et la plaque intermédiaire (17) s'étendent parallèlement les unes aux autres.

15. Filtre à air pour un moteur à combustion interne, en particulier un véhicule automobile,
- avec un boîtier de filtre (2) qui présente une entrée d'air (5) et une sortie d'air (4) et qui entoure un espace de réception (7),
- avec un élément de filtre (3) selon l'une quelconque des revendications 1 à 14 qui est inséré dans l'espace de réception (7) et dedans sépare un côté brut (8) relié de manière fluidique à l'entrée d'air (5) d'un côté propre (9) relié de manière fluidique à la sortie d'air (4).
